# EUROPEAN PATENT SPECIFICATION

(11) **EP 0 398 531 B1**
(45) Date of publication and mention of the grant of the patent: **29.09.1993**
(21) Application number: 90304572.2
(22) Date of filing: 26.04.1990
(51) Int. Cl.: B60T 8/42, F16D 59/02, H02K 7/102, H02P 3/04

(54) **Anti-lock braking system**
Antiblockier-Bremssystem
Système de freinage à antiblocage

(30) Priority: 17.05.1989 US 352971
(43) Date of publication of application: 22.11.1990
(73) Proprietor: GENERAL MOTORS CORPORATION, Detroit Michigan 48202 (US)
(72) Inventor: Mikhaeil-Bouls, Naila, Troy Michigan 48098 (US); Leppek, Kevin G., Troy Michigan 48098 (US); Hammersmith, Robert J., Rochester Hills Michigan 48064 (US); Wilkey, Paul D., Vandalia Ohio 45377 (US); Gardner, Thomas H., Englewood Ohio 45322 (US); Ricker, Dennis J., Huber Heights Ohio 45424 (US); Kowalik, James J., West Carrollton Ohio 45449 (US)
(74) Representative: Denton, Michael John

(56) References cited:
- EP-A- 0 262 102
- WO-A-86/05028
- DE-A- 1 916 662
- GB-A- 987 101
- US-A- 3 195 692
- US-A- 4 653 815

## Description

The field of the present invention is that of anti-lock braking systems (ABS) for automotive vehicles, and to a pressure modulator therefor.

Anti-lock braking systems typically modulate the pressure delivered to a wheel brake to prevent the vehicle wheel from locking up in the braking condition. Two prior anti-lock braking systems are shown in US Patent Nos. 4,653,815 and 4,756,391. In both of the aforementioned systems, an electronic controller signals a motor which is gearably engaged with a driven member which is in turn threadably engaged with an actuator piston. Piston movement is used to modulate the pressure delivered to the wheel brakes of the vehicle.

DE-A-1916662 discloses an ABS in accordance with the pre-amble of Claim 1. WO 86/05028 discloses an arrangement for braking electric motors.

An anti-lock braking system in accordance with the present invention is characterised over DE-A-1916662 by the features specified in the characterising portion of Claim 1.

The present invention provides an anti-lock braking system which is an alternative to the aforementioned prior art anti-lock braking systems. To reduce the space envelope of the aforementioned systems, the present invention in a preferred embodiment provides a piston which is attached to a non-rotative nut which is threadably engaged by a power screw rather than having the piston attached to a non-rotative screw which is engaged by a rotative nut. The above modification allows the present invention to provide anti-lock braking systems wherein the components are smaller and wherein there is less rotative mass, thereby greatly reducing the angular inertia of the system.

Furthermore, in a preferred embodiment, the present invention provides an actuator with a check valve providing an alternative flow path from the master cylinder to the wheel brake. The check valve is opened by the piston itself. Therefore, possible malfunctions in the isolation valve will not prevent operator control of the vehicle brakes since there is an alternative flow path to the wheel brake.

To maximize reaction speed, a high efficiency thread is utilized between the power screw and the non-rotative nut, therefore, pressure within the actuator can back drive the piston. The present invention is configured in such a manner that the piston, in its extreme position, opens the check valve when the system is not in the ABS mode of operation. The piston can be held with an inefficient thread, however, it has been found preferable to use an efficient thread (to lower current required by the DC motor). Therefore, to use an efficient thread, there must be some means of holding the piston at its extreme position when it is exposed to master cylinder pressure, but not within the ABS mode wherein the DC motor is being powered. Space limitation under the hood of a vehicle require that the solution to the above need take up as less space as possible.

One method to prevent back drive of the piston is to use a one-way spring type clutch brake which restrains movement of the rotor of the DC motor. Such an anti-lock braking system is disclosed in our copending patent application EP-A-0 398 532 (MJD/3292), filed the same day as the present application. The present invention provides an anti-lock braking system which is an alternative to that found in the above mentioned application.

The present invention will now be described, by way of example, with reference to the accompanying drawings, in which:-
FIGURE 1 is a schematic view of a preferred embodiment of the present invention;
FIGURE 2 is a view taken along line 2-2 of FIGURE 1.

The anti-lock braking system (ABS) 7 of the present invention includes a master cylinder 12 for supplying pressurized fluid. Connected on a wheel 14 and schematically shown, is a fluid activated wheel brake cylinder 16 (hereinafter referred to as a wheel brake) which receives pressurized fluid from the master cylinder 12 for restraining rotational movement of the wheel 14. The wheel brake 16 may be a conventional drum or disc type vehicle brake. A brake pedal 22 controlled by the vehicle operator actuates the master cylinder 12.

An (electronic) controller 18 is also provided. A sensor 20 (tied into the electronic controller 18) in the wheel brake 16 determines rotational speed of the wheel 14. A sensor (not shown) determines whether or not the brake pedal 22 of the vehicle is being operated and also reports the information to the electronic controller 18. The electronic controller 18 will be cognizant of the rotational condition of the wheel 14 and will provide an appropriate signal in response thereto. The signal will place the anti-lock braking system 7 in an ABS mode of operation if the condition of the wheel 14 is within preset parameters.

A (normally open) solenoid valve 24 when activated to a closed position in response to a signal given by the electronic controller 18 functions as an isolation valve to prevent fluid communication between the master cylinder 12 and the wheel brake 16. An actuator 26 is provided having an actuator body 30 with a longitudinal bore 32. (As shown, the actuator 26 is connected with one wheel brake 16, but a vehicle may have actuators connected to more than one wheel brake or actuators for each single wheel for individualized ABS response). The longitudinal bore 32 has a first fluid passage 42 allowing fluid communication between the wheel brake 16 and the longitudinal bore 32, and also has fluid communication with the master cylinder 12 via second fluid passage 34. Additionally, as shown, the longitudinal bore 32 has an alternative fluid communitative path with the master cylinder 12 when the solenoid valve 24 is not activated to the closed position by way of third fluid passage 40. Fluid flow passes over a transverse slot (not shown) of a piston 44. However the solenoid valve 24 could directly tie into the wheel brake 16 and first fluid passage 42 could "T" into that line. The second fluid passage 34 has a check valve 38 for interrupting fluid flow between the master cylinder 12 and the wheel brake 16. The check valve 38 also allows delivery of fluid back to the master cylinder 12 whenever the wheel brake 16 has a pressure greater than that in the master cylinder 12. Therefore, the anti-lock braking system 7 is sensitive to an operator relieving the wheel brake 16 by removing his or her foot from the brake pedal 22 without any needed input from the electronic controller 18.

The piston 44 is slidably and sealably mounted within the longitudinal bore 32. Movement of the piston 44 provides a variable control volume in communication with the wheel brake 16, thereby modulating the pressure therein. A nut 46 is connected with the piston 44 and the nut 46 is slidably mounted within the longitudinal bore 32 in a non-rotative fashion.

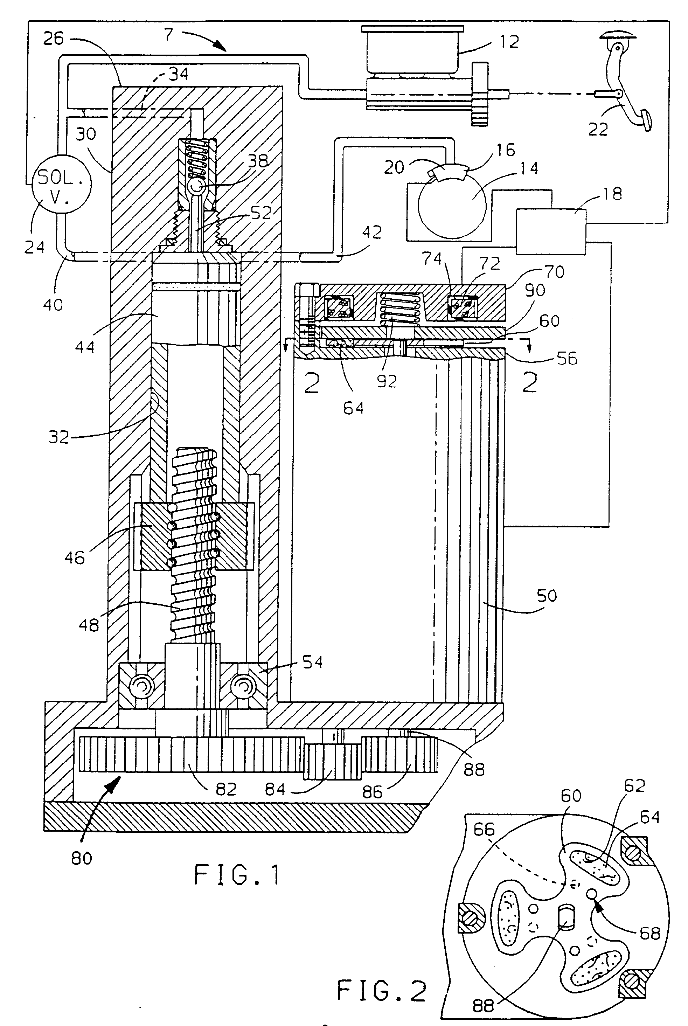

A power screw 48 projects into the nut 46 and is threadably engaged therewith in an efficient manner. The power screw 48 has a fixed rotational axis with respect to the actuator body 30. Powering the power screw 48 is a (reversible) DC motor 50 which is responsive to the signals given to it by the electronic controller 18. In the position shown, for normal braking operation, the piston 44 is held at the extreme up position and must be held within a tolerance of 0.762 mm (3/100 of an inch) to maintain the check valve 38 in the open position via a rod 52 (tolerances shown in Figure 1 are greatly enlarged for purposes of illustration).

The power screw 48 is connected to a gear train 80 which is in turn also connected with the DC motor 50. The power screw 48 is mounted by a bearing 54 and has a first (large) gear 82 connected to the end thereto. The first (large) gear 82 meshes with an idler gear 84 which in turn meshes with a (smaller) pinion gear 86. The pinion gear 86 axially floats on one end of a rotor 88 of the DC motor 50 and is held on by a spring clip (not shown).

The power screw 48 along with the gear train 80 and the (non-rotative) nut 46 provide the means to reciprocally move the piston 44 within the longitudinal bore 32 and the DC motor 50 is torsionally connected via the gear train 80 to move the piston 44. Surrounding the DC motor 50 is a housing 56.

On the opposite end of the housing 56 to the gear train 80 is a (three-lobe) disc 60. The three-lobe disc 60 is connected with (keyed to) the other end of the rotor 88. The three-lobe disc 60 has three generally oval apertures 62 geometrically spaced. Inserted within these oval apertures 62 are brake pads 64 which are slightly smaller than the oval apertures and can therefore float relative to the three-lobe disc 60. The brake pads 64 will preferably be a canvas phenolic resin impregnated laminate which tends to provide high levels of durability in usage.

The three-lobe disc 60 (typically fabricated out of stainless steel) also has towards its middle portion a series of geometric dimples 66, 68 which are stamped out. Three dimples 66 are pressed outward in a direction towards the housing 56, and three dimples 68 are pressed outward in a direction away from the housing 56. Therefore, when the DC motor 50 is turning during operation of the anti-lock braking system 7, the dimples 66 tend to prevent the outer portions of the three-lobe disc 60 from contacting the housing 56 thereby reducing friction with the same. In like manner, the other dimples 68 can provide a contact surface with a plunger 90 to also reduce friction with the same.

The plunger 90, which is located on the opposite side of the three-lobe disc 60 to the housing 56, and the surface of the housing 56 adjacent the three-lobe disc cooperate to provide friction surfaces for engagement with the brake pads 64 of the three-lobe disc 60 to restrain rotation thereof, thereby braking the DC motor 50 and restraining movement of the piston 44 within the longitudinal bore 32. The plunger 90 is biased by a coil spring 92 to a position to urge the friction surfaces into engagement with the brake pads 64 of the three-lobe disc 60.

On the opposite side of the plunger 90 to the three-lobe disc 60 is an electromagnetic core 70 which is responsive to a signal given by the electronic controller 18 to move the plunger 90 to a position allowing for removal of engagement of the friction surfaces with the brake pads 64 of the three-lobe disc 60, and thereby allowing free movement of DC motor 50 and of the piston 44 within the longitudinal bore 32. The electromagnetic core 70 comprises a coil 72. To minimize the weight of the ABS 7 and also to minimize the space displacement of the ABS, it is desirable to keep the electromagnetic core 70 as small as possible. Also it is desirable to keep the air gap as small as possible between the electromagnetic core 70 and the plunger 90 to provide a fast response typically in the area of 5 to 8 milliseconds. To keep heat buildup down, current should be minimized by keeping resistance high. However, a fast response is provided by a low inductance which is also provided by as few coil 72 turns as possible. The nature of the electromagnetic brake is such that the initial separation of the plunger 90 from the three-lobe disc 60 requires the highest current. However, as the plunger 90 moves away from the three-lobe disc 60, current can be reduced. Therefore, a dual level driver is utilized to power the coil 72 by duty cycling the voltage in an 8 to 20 kilohertz range, thereby reducing the current to a lower level when the plunger 90 has been urged away from the three-lobe disc 60.

As shown, the coil 72 is mounted within the electromagnetic core 70 in a plastic snap-in bobbin 74. It has been shown to be preferable that the stator of the electromagnetic core be comprised of a phosphorous 45% sintered metal having a density of 6.8 to 7.2 grams per cubic centimeter to help reduce eddy currents. In operation, typically the air gap at its maximum will be of the order of 0.254 mm (1/100 of an inch).

The thickness of the brake pad 64 (sometimes referred to as shoes) will be greater than that of the three-lobe disc 60 even with the added dimension of the dimples 66 and 68. Therefore, when the plunger 90 is released into a position to brake the DC motor 50 (no current in the coil 72), the brake pads 64 will be compressed by the plunger 90 against the housing 56, and a dual braking will be achieved. This is much more efficient than utilizing a brake pad 64 which will be placed on the underside of the three-lobe disc 60 and which would only engage with the top of the housing 56.

When the plunger 90 is pulled away from the three-lobe disc 60, the brake pads 64 can float (move) within their respective apertures 62, and the three-lobe disc may move to come into engagement with the housing 56 or the plunger. However, in this situation, the dimples 66,68 prevent full surface-to-surface contact, thereby reducing friction.

Since the weight of the three-lobe disc 60 and rotor 88 are not on the brake pads 64 during normal operation of the DC motor 50, there is very little friction on the brake pads 64 during DC motor 50 rotation, hence reducing wear of the brake pads.

The present invention provides an ABS 7 which has a path from the master cylinder 12 to the wheel brake 16 other than through the solenoid valve 24. This allows the wheel brakes 16 to be applied in the case of solenoid valve 24 failure. In normal operation, fluid from the master cylinder 12 can go past the check valve 38 and/or through the solenoid valve 24 into the longitudinal bore 32 and then out to the wheel brake 16. Build up of fluid pressure in the longitudinal bore 32 will tend to act on the piston 44 to try to move it downwards (Figure 1). In order to prevent this movement, the electromagnetic brake provided by the three-lobe disc 60, electromagnetic core 70, and plunger 90 act to prevent rotation of the rotor 88, thereby preventing rotation of the gear train 80 and power screw 44, thereby holding the piston 44 in position.

During operation of the ABS 7, the solenoid valve 24 is closed. The piston 44 is moved by the DC motor 50 to close the check valve 38 and then, to vary the volume of a control volume defined by part of the longitudinal bore 32 to modulate the fluid pressure applied to the wheel brake 16. During this operation, the plunger 90 is pulled away from the three-lobe disc 60 and the brake pads 64 float within the apertures 62, and the dimples 66,68 act to prevent full surface contact between the three-lobe disc 60 and the plunger 90 or housing 56, thereby lowering any possible friction generated when ABS is operating.

When it is desired to lock the piston 44 in position, the plunger 90 is released and due to the bias of coil spring 92, will move to trap the brake pads 64 between the plunger 90 and the housing 56, to lock the rotor 88.

The present invention is not restricted to the shape of disc 60 and apertures 62 described above, and any other suitable shapes may be used.

## Claims

1. An anti-lock braking system (7) (ABS) comprising a master cylinder (12) for supplying pressurized fluid; a wheel brake (16) receiving pressurized fluid from the master cylinder and for restraining rotational movement of a wheel (14); a controller (18) cognizant of the rotational condition of the wheel and providing a signal when the wheel condition is within preset parameters; an actuator (26) having a longitudinal bore (32) and a piston (44) slidably sealably mounted within the longitudinal bore for providing a variable control volume in communication with the wheel brake and thereby modulating the pressure therein, the longitudinal bore (32) being connectable to the wheel brake (16) by a first fluid passage (42), and directly to the master cylinder (12) by a second fluid passage (34); and a reversible motor (50) torsionally connected with the piston by way of a rotor (88) to reciprocally move the piston; characterised by: the rotor (88) being connected to a disc (60); a friction surface (56,90) for engagement with the disc to restrain rotation of the rotor (88) to lock the position of the piston (44); a plunger (90) biased into a position to urge engagement of the friction surface with the disc; an electromagnetic core (70) responsive to a signal by the controller (18) to move the plunger to a position allowing removal of engagement between the friction surface (56) and the disc (60) allowing rotation of the rotor by the reversible motor and movement of the piston; and an isolation valve (24) connectable to the longitudinal bore (32) by a third fluid passage (40) and responsive to close upon an activation signal given by the controller to prevent fluid communication between the master cylinder and the wheel brake by way of the third fluid passage.

2. An anti-lock braking system as claimed in Claim 1, wherein the actuator (26) has a check valve (38) in the second fluid passage (34) for controlling fluid communication between the master cylinder (12) and the wheel brake (16), the piston (44) engaging the check valve in an extreme position to open the check valve.

3. An anti-lock braking system as claimed in any one of claims 1 to 2, wherein the reversible motor (50) is torsionally connected to the piston (44) by a nut (46) slidably and non-rotatably mounted within the longitudinal bore (32), a power screw (48) with a rotational axis fixed with respect to the longitudinal bore, and by a gear train (80) connected to and driven by the rotor (88).

4. An anti-lock braking system as claimed in Claim 3, wherein the rotor (88) passes through the reversible motor (50) and has the gear train (80) connected to one end and the disc (60) connected to the other end.

5. An anti-lock braking system as claimed in any one of claims 1 to 4, wherein the plunger (90) and a surface (56) adjacent to the reversible motor (50) are separated by the disc (60) and both of the plunger and the surface function to provide a friction surface.

6. An anti-lock braking system as claimed in any one of claims 1 to 5, wherein the signal to the electromagnetic core (70) is duty cycled to provide a dual level driver wherein the duty cycle is at its maximum when the plunger (90) is to be removed from the disc (60), and at a lower duty cycle once removed.

7. An anti-lock braking system as claimed in any one of claims 1 to 6, wherein the disc (60) has brake pads (64) for engaging the friction surface.

8. An anti-lock braking system as claimed in claim 7, wherein each brake pad (64) is a loose fit in an aperture (62) in the disc (60).

9. An anti-lock braking system as claimed in claim 7 or claim 8, wherein the disc (60) has dimples (66,68) rising from its surface to prevent the said surface from touching the friction surface (56,90) when the reversible motor (50) is operating.

## Patentansprüche

1. Ein Antiblockier-Bremssytem (7) (ABS) mit einem Hauptzylinder (12) zur Lieferung von unter Druck stehendem Fluid; einer Radbremse (16), die aus dem Hauptzylinder unter Druck stehendes Fluid erhält und dem Bremsen der Rotationsbewegung eines Rades (14) dient; einem Regler (18), der über den Drehzustand des Rades informiert ist und ein Signal zur Verfügung stellt, wenn der Zustand des Rades innerhalb vorgegebener Parameter ist; einem Betätigungsglied (26), das eine Longitudinalbohrung (32) und einen Kolben (44) hat, der gleit- und abdichtbar innerhalb der Longitudinalbohrung angebracht ist, um in Verbindung mit der Radbremse ein variables Regelvolumen zur Verfügung zu stellen, und damit den dort herrschenden Druck zu modulieren, wobei die Longitudinalbohrung (32) mit der Radbremse (16) durch einen ersten Fluiddurchgang (42) verbunden werden kann, und über einen zweiten Fluiddurchgang (34) direkt mit dem Hauptzylinder (12); und einem reversierbaren Motor (50), der mittels eines Rotors (88) mit dem Kolben drehbar verbunden ist, um den Kolben hin und her zu bewegen;
**gekennzeichnet**, dadurch
daß der Rotor (88) mit einer Scheibe (60) in Verbindung steht; durch eine Reibungsoberfläche (56, 90) für den Eingriff mit der Scheibe zur Beschränkung der Drehung des Rotors (88), um die Lage des Kolbens (44) zu arretieren; eine Druckplatte (90), die in eine Lage vorgespannt wird, um Eingriff der Reibungsoberfläche mit der Scheibe zu erzwingen; einen elektromagnetischen Kern (70), der auf ein Signal des Reglers (18) anspricht, um die Druckplatte in eine Position zu bewegen, welche die Wegnahme des Eingriffs zwischen der Reibungsoberfläche (56) und der Scheibe (60) ermöglicht, was die Drehung des Rotors durch den reversierbaren Motor und die Bewegung des Kolbens gestattet; und ein Isolationsventil (24), das mit der Longitudinalbohrung (32) durch einen dritten Fluiddurchgang (40) verbindbar ist, und mit Schließen auf ein vom Regler gegebenes Aktivierungssignal reagiert, um die Fluidverbindung zwischen dem Hauptzylinder und der Radbremse mittels des dritten Fluiddurchgangs zu verhindern.

2. Ein Antiblockier-Bremssystem wie nach Anspruch 1 beansprucht, worin das Betätigungsglied (26) ein Rückschlagventil (38) im zweiten Fluiddurchgang (34) hat, um die Fluidverbindung zwischen dem Hauptzylinder (12) und der Radbremse (16) zu steuern, wobei der Kolben (44) in einer Endstellung mit dem Rückschlagventil in Eingriff steht, um das Rückschlagventil zu öffnen.

3. Ein Antiblockier-Bremssystem wie in einem der Ansprüche 1 bis 2 beansprucht, worin der reversierbare Motor (50) mit dem Kolben (44) durch eine Mutter (46), die gleit- und nicht-drehbar innerhalb der Longitudinalbohrung (32) befestigt ist, eine Antriebsspindel (48), die eine bezüglich der Longitudinalbohrung feste Drehachse hat, und durch ein Getriebe (80), das verbunden mit und angetrieben vom Rotor (88) ist, torsionsmäßig verbunden ist.

4. Ein Antiblockier-Bremssystem wie in Anspruch 3 beansprucht, worin der Rotor (88) durch den reversierbaren Motor (50) hindurchgeht und an seinem einen Ende das Getriebe (80) und an seinem anderen Ende die Scheibe (60) angebracht ist.

5. Ein Antiblockier-Bremssystem wie in einem der Ansprüche 1 bis 4 beansprucht, worin die Druckplatte (90) und eine Oberfläche (56), die dem reversierbaren Motor (50) benachbart sind, durch die Scheibe (60) getrennt sind, und sowohl die Druckplatte als auch die Oberfläche dem Zweck dienen, eine Reibungsoberfläche zur Verfügung zu stellen.

6. Ein Antiblockier-Bremssystem wie in einem der Ansprüche 1 bis 5 beansprucht, worin das zum elektromagnetischen Kern (70) gehende Signal so getastet wird, daß ein Dual-Niveautreiber zur Verfügung steht, wobei das Tastverhältnis auf seinem Maximum ist, wenn die Druckplatte (90) von der Scheibe (60) entfernt werden soll, und nach der Entfernung in einem geringeren Tastverhältnis.

7. Ein Antiblockier-Bremssystem wie in einem der Ansprüche 1 bis 6 beansprucht, worin die Scheibe (60) Bremsklötze (64) für den Eingriff der Reibungsoberflächen hat.

8. Ein Antiblockier-Bremssystem wie in Anspruch 7 beansprucht, worin jeder Bremsklotz (64) locker in eine Öffnung (62) in der Scheibe (60) eingepaßt ist.

9. Ein Antiblockier-Bremssystem wie in Anspruch 7 oder Anspruch 8 beansprucht, worin die Scheibe (60) von ihrer Oberfläche herausgehende Vertiefungen (66, 68) hat, um zu verhindern, daß die Oberfläche die Reibungsoberfläche (56, 90) berührt, wenn der reversierbare Motor (50) in Betrieb ist.

## Revendications

1. Dispositif de freinage à antiblocage (7) (ABS) comportant un maître-cylindre (12) pour alimenter un fluide sous pression; un frein de roue (16) recevant du fluide sous pression à partir du maître-cylindre et destiné à limiter le mouvement en rotation d'une roue (14); un dispositif de commande (18) ayant connaissance de la condition de rotation de la roue et fournissant un signal lorsque la condition de la roue est située dans des paramètres présélectionnés; un actionneur (26) ayant un alésage longitudinal (32) et un piston (44) monté de manière coulissante et étanche dans l'alésage longitudinal pour fournir un volume de commande variable en communication avec le frein de roue et par conséquent moduler la pression à l'intérieur de ce dernier, l'alésage longitudinal (32) pouvant être relié au frein de roue (16) par un premier passage (42) de fluide, et directement au maître-cylindre (12) par un deuxième passage (34) de fluide; et un moteur (50) réversible relié de manière torsionnelle au piston par l'intermédiaire d'un rotor (88) pour déplacer le piston selon un mouvement alternatif; caractérisé en ce que le rotor (88) est relié à un disque (60); une surface de friction (56, 90) étant en prise avec le disque pour limiter la rotation du rotor (88) pour bloquer la position du piston (44); un piston plongeur (90) étant contraint vers une position pour amener la surface de friction en contact avec le disque; un noyau électromagnétique (70) répondant à un signal du dispositif de commande (18) pour déplacer le piston plongeur vers une position permettant la suppression du contact entre la surface de friction (56) et le disque (60) permettant la mise en rotation du rotor par le moteur réversible et le déplacement du piston; et une vanne (24) d'isolation pouvant être reliée à l'alésage longitudinal (32) par un troisième passage (40) de fluide et répondant vers la fermeture à un signal d'activation fourni par le dispositif de commande pour empêcher la communication de fluide entre le maître-cylindre et le frein de roue par l'intermédiaire du troisième passage de fluide.

2. Dispositif de freinage à antiblocage selon la revendication 1, dans lequel l'actionneur (26) comporte un clapet anti-retour (38) situé dans le deuxième passage (34) de fluide pour commander la communication de fluide entre le maître-cylindre 12 et le frein de roue (16), le piston (44) étant en contact avec le clapet anti-retour dans une position extrême pour ouvrir le clapet anti-retour.

3. Dispositif de freinage à antiblocage selon l'une quelconque des revendications 1 ou 2, dans lequel le moteur (50) réversible est relié de manière torsionnelle au piston (4) par un écrou (46) monté coulissant et non rotatif dans l'alésage longitudinal (32), par une vis (48) de puissance ayant un axe de rotation fixe par rapport à l'alésage longitudinal, et par un train d'engrenages (80) relié au rotor (88) et entraîné par ce dernier.

4. Dispositif de freinage à antiblocage selon la revendication 3, dans lequel le rotor (88) passe à travers le moteur (50) réversible en ayant le train d'engrenages (80) relié à une première extrémité et le disque (60) relié à l'autre extrémité.

5. Dispositif de freinage à antiblocage selon l'une quelconque des revendications 1 à 4, dans lequel le piston plongeur (90) et une surface (56) adjacente au moteur réversible (50) sont séparés par ledit disque (60) et le piston et la surface agissent tous deux pour fournir une surface de friction.

6. Dispositif de freinage à antiblocage selon l'une quelconque des revendications 1 à 5, dans lequel le signal du noyau électromagnétique (70) est sous forme de cycle pour produire un dispositif d'entraînement à double niveau dans lequel le cycle est à son maximum lorsque le piston plongeur (90) doit être éloigné du disque (60), et à un niveau de cycle plus bas lorsqu'il a été éloigné.

7. Dispositif de freinage à antiblocage selon l'une quelconque des revendications 1 à 6, dans lequel le disque (60) comporte des patins de frein (64) destinés à venir en contact avec la surface de friction.

8. Dispositif de freinage à antiblocage selon la revendication 7, dans lequel chaque patin de frein (64) est agencé avec jeu dans une ouverture (62) située dans le disque (60).

9. Dispositif de freinage à antiblocage selon la revendication 7 ou 8, dans lequel le disque (60) comporte des bossages (66, 68) érigés sur sa surface pour empêcher ladite surface de toucher la surface de friction (56, 90) lorsque le moteur (50) réversible est en fonctionnement.
